# EUROPÄISCHE PATENTANMELDUNG

(11) **EP 1 029 664 A1**
(43) Veröffentlichungstag der Anmeldung: **23.08.2000**
(21) Anmeldenummer: 00102806.7
(22) Anmeldetag: 11.02.2000
(51) Int. Cl.: B32B 27/08, B29B 11/14, B29C 45/16, B29C 49/22, B65D 1/02

(54) **Mehrschichtiger hohler Kunststoffartikel**

(30) Priorität: 20.02.1999 DE 19907386
(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

Ein mehrschichtiger hohler Kunststoffartikel, bei dem die einzelnen Schichten durch Spritzgießen in definierte Formhohlräume hergestellt sind, besitzt einen Neckring (10h). Dadurch, daß der Neckring (10h) eine Ausnehmung (10g) aufweist, in der zumindest eine der mittleren Schichten (62) aufgenommen und in Richtung auf den Neckring (10f) begrenzt ist, wird auch beim Spritzgießen an aufeinanderfolgenden Schichten erreicht, daß Material der folgenden Schichten zuverlässig unterhalb des Neckrings im Kunststoffartikel angeordnet ist.

## Beschreibung

Die Erfindung betrifft einen mehrschichtigen hohlen Kunststoffartikel nach dem Oberbegriff des Anspruches 1.

Ein derart hergestellter Kunststoffartikel ist z.B. aus der WO 95/00325 A bekannt, wobei einzelne Schichten in definierte Formhohlräume eingespritzt werden. In einem ersten Schritt wird ein Vorformling erstellt, der dann in einen zweiten Formhohlraum verbracht wird und dort einen Teil dieses zweiten Formhohlraums begrenzt, so dass eine zweite Schicht durch Spritzgießen angespritzt werden kann. Vom Einspritzen der üblicherweise verhältnismäßig dünnen Barriereschicht wird jedoch gemäß Seite 7, Zeilen 12 bis 22 Abstand genommen. Diese Schicht aus Barrierematerial wird stattdessen durch Tauchen, Sprühen oder Bürsten aufgetragen, da der Fachmann wohl davon ausgeht, dass die Barriereschicht durch Spritzgießen überhaupt nicht zuverlässig hergestellt werden kann.

In der US 4,646,925 A wird die Barriereschicht dadurch erzeugt, dass zunächst eine innere Schicht und ein Formteil aus Barrierematerial durch Spritzgießen hergestellt werden. Dieses Formteil wird über den unteren Teil des die innere Schicht bildenden Zwischenformlings gestülpt und mit der inneren Schicht verbunden. Beide Teile werden in einen neuen Formhohlraum eingesetzt, wobei dann die zusätzlich eingespritzte äußere Schicht die Barriereschicht wie bei einem Kondom über die Kemschicht rollt (Spalte 2, Zeilen 62 bis Spalte 3, Zeile 25). Ein unmittelbares Einspritzen der Barriereschicht an den Vorformling, so dass nach dem Einspritzvorgang die Barriereschicht sich bereits an ihrer endgültigen Stelle befindet, erfolgt nicht. Dadurch ist keine gleichmäßige Verteilung der Barriereschicht möglich, da bereits die Zentrierung des Formteils aus Barrierematerial an der ersten Schicht unabhängig von den sonstigen spritztechnischen Unwägbarkeiten beim Einspritzen des dritten Werkstoffs dem entgegensteht.

Bei den dort vorgeschlagenen Vorformlingen wird stets die mittlere Schicht, meist eine Barriereschicht, bis in den Neckring und den oberen Gewindebereich geführt. Abgesehen davon, daß das Barrierematerial meist recht teuer ist und daher nur sehr dünnwandig eingebracht werden sollte, so daß lange Fließwege von Nachteil sind, ist ein Einbringen der Barriereschicht bis in den Neckring grundsätzlich nicht erforderlich, da der Neckring aufgrund seiner Materialstärke bereits eine ausreichende Barriereeigenschaft aufweist, der im übrigen Bereich durch die Barriereschicht erst hervorgerufen werden muß. Zudem kann der Neckring Bestandteil der außen liegenden Schicht sein, so daß insofern kein Recyclingmaterial eingesetzt werden kann, da dies aufgrund behördlicher Bestimmungen in einigen Ländern nicht mit dem Füllgut und den Lippen oder dem Mund des Benutzers in Berührung kommen darf.

Daß die Barriereschicht nicht bis in den Neckring geführt werden muß, wurde auch bereits in der EP 0 736 365 A2 erkannt. Die Herstellung erfolgt dort nicht jedoch nicht durch Spritzgießen in Formhohlräume in aufeinanderfolgenden Schritten. Dort wird vielmehr durch Thermoformen ein Innenkörper aus dem Barrierematerial gebildet, der anschließend überspritzt wird. Auch ist der Neckring Teil des außen liegenden Materials.

Ausgehend von diesem Stand der Technik liegt der vorliegenden Erfindung die Aufgabe zugrunde, einen Kunststoffartikel herzustellen, bei dem auch bei Herstellung durch Spritzgießen in aufeinanderfolgenden Schritten Material unterhalb des Neckrings angeordnet werden kann.

Diese Aufgabe wird durch einen Kunststoffartikel mit den Merkmalen des Anspruches 1 gelöst.

Der Neckring weist eine Ausnehmung auf, in der zumindest eine der mittleren Schichten aufgenommen ist, so daß sie in Richtung auf den Neckring begrenzt ist und definiert in einer bestimmten Höhe gehalten werden kann. Dadurch entfällt die Gefahr, daß diese Schicht im Bereich des Neckrings unbeabsichtigt an die Oberfläche tritt, so daß sich bei Barrierematerial die Gefahr eines Delaminierens aufgrund Eintritt von Feuchtigkeit vermeiden läßt.

Bei einer Ausgestaltung nach den Ansprüchen 4 und 5 wird dieses Barrierematerial nach außen verschlossen, in dem die äußere, das Barrierematerial überdeckende Schicht bis in die Ausnehmung geführt ist, so daß auch von außen keine Feuchtigkeit eintreten kann.

Bei einer Ausgestaltung nach Anspruch 6 befindet sich im Bereich, der an das Füllgut anschließt, durchgängig ein Material, z.B. Neuware, während die äußerste Schicht Recyclingmaterial sein kann.

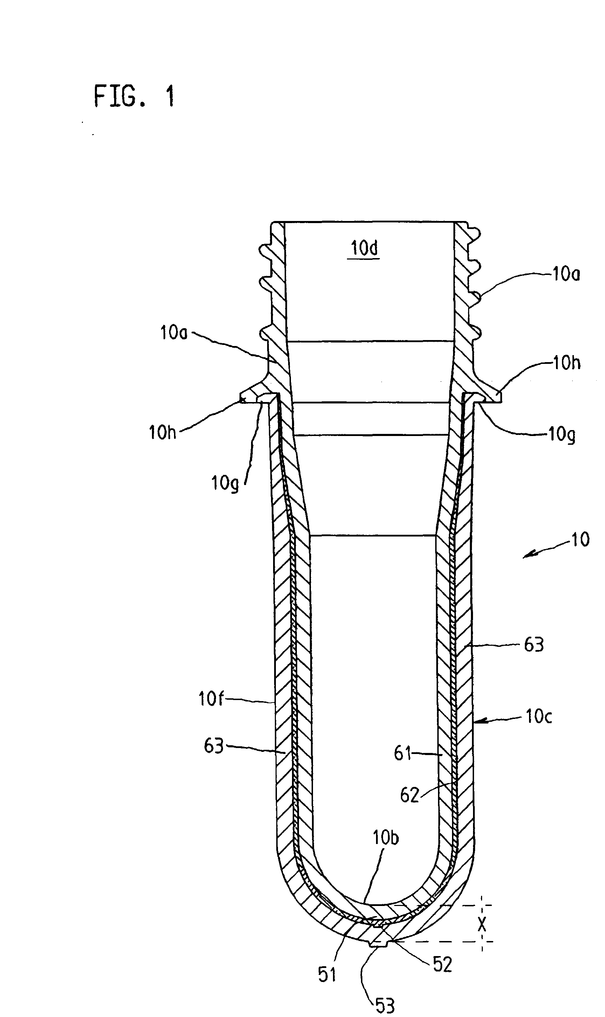

Die Erfindung wird an der beigefügten einzigen Figur 1 erläutert, die einen Schnitt durch einen hohlen Kunststoffartikel zeigt.

Die Figur zeigt einen mehrschichtigen hohlen Kunststoffartikel 10, der zum Beispiel als Vorformling zur Herstellung von Kunststoffhohlkörpern biaxial verstreckt werden kann. Die Herstellung erfolgt auf einer Spritzgießmaschine zur Verarbeitung von Kunststoffen und anderer plastifizierbarer Massen, wobei der Vorformling wie folgt hergestellt wird:
- Plastifizieren eines ersten Werkstoffs und Einspritzen des plastifizierten Werkstoffs in einen ersten Formhohlraum, der dem Anteil des ersten Werkstoffs an der Gesamtform des Vorformlings entspricht zur Formung eines ersten Zwischenformlings,
- Zusammenbringen des Zwischenformlings mit einem zweiten Hohlraum zur Bildung eines zweiten Formhohlraums, der teilweise durch den Zwischenformling begrenzt wird und dem Anteil des zweiten Werkstoffs an der Gesamtform des Vorformlings entspricht,
- Einspritzen des plastifizierten zweiten Werkstoffs in den zweiten Formhohlraum.

Diese Schritte können beliebig wiederholt werden, um schichtweise einen derartigen Kunststoffartikel aufzubauen. Von Vorteil ist die genaue Positionierung der Werkstoffe im Vorformling, da sich die Werkstoffe im jeweiligen Formhohlraum exakt positioniert beim Einspritzen erstrecken. Dadurch ist eine nahezu 100%-ige Positionierung der verschiedenen Materialien in definierten Formhohlräumen möglich. Wenigstens einer der Werkstoffe besteht üblicherweise aus Barrierematerial.

Der Kunststoffartikel besitzt eine Wandung 10c, in der die einzelnen Schichten 61,62,63 über ihre Kontaktfläche miteinander verbunden sind. Die Angüsse 51,52,53 der einzelnen Schichten 61,62,63 sind im Bereich des Bodens 10b so angeordnet, daß der Boden 10b innerhalb der Wandstärke x amorph bleibt. Dies wird durch Einspritzen mittels einer offenen Verschlußdüse (Vermeiden kristalliner Bereiche) oder durch Erzeugung eines langen Angußzapfens beim Einspritzen der ersten Schicht 61 (Verschieben kristalliner Bereiche aus der Wandstärke des Bodens 10b heraus) erreicht, wobei darauf zu achten ist, daß der Anguß insgesamt möglichst nicht größer wird als es bisher im Stand der Technik üblich ist.

Das obere offene Ende 10d weist einen Gewindebereich 10a und einen Neckring 10h auf und ist mit dem Boden 10b über einen Zwischenbereich 10f verbunden. Die Wandung 10c besteht aus den Schichten 61,62 und 63, die miteinander über ihre Kontaktfläche verbunden sind. Es kann sich zum Beispiel bei der innersten Schicht 61, die sich bis in den Gewindebereich erstreckt, um Neuware, bei der Schicht 62 um eine Barriereschicht und bei der äußersten Schicht 63 um Recyclingmaterial handeln. Grundsätzlich kann der Kunststoffartikel auch weitere Schichten aufweisen.

Im Ausführungsbeispiel ist die Schicht 61 aus dem gleichen Material hergestellt wie der Neckring 10h, wobei die Herstellung im selben Einspritzvorgang erfolgt ist. Sämtliche Schichten werden durch Einspritzen bzw. Spritzgießen in vorgegebene Formhohlräume hergestellt. Die Schicht 61 erstreckt sich zumindest teilweise über die Wandung 10c und auch den Boden 10b, im Ausführungsbeispiel ist sie durchgängig über Boden 10b und Wandung 10c bzw. über den Zwischenbereich 10f geführt.

Der Neckring 10h weist eine Ausnehmung 10g auf, in der zumindest eine der mittleren Schichten 62 aufgenommen ist. Die Ausnehmung begrenzt die Erstreckung der Schicht 62 in Richtung auf den Neckring 10h, so daß das Ende dieser Schicht eindeutig im bezug auf den Neckring 10h definiert ist. Da es sich bei der Schicht 62 meist um Barrierematerial handelt, ist damit sichergestellt, daß kein Barrierematerial bis in einen nicht exakt definierbaren Bereich in den Neckring 10h geführt ist und dort eventuell sogar oberflächig austritt, so daß die Gefahr des Delaminierens infolge eines Eintritts von Feuchtigkeit vermieden werden kann.

In der Ausnehmung 10g endet auch die äußerste Schicht 63, die die ringförmige Ausnehmung 10g nach außen verschließt. Dadurch ist die Schicht 62 auch nach außen abgedeckt. Gleichzeitig kann aufgrund dieser Anordnung für die äußere Schicht günstigeres Recyclingmaterial verwendet werden, zumal sichergestellt ist, daß dieses Material nicht bis in einen Bereich geführt ist, in dem die Lippen des Benutzers mit diesem Material in Berührung kommen können. Der Neckring 10h und die innere Schicht 61 grenzen an das Füllgut an und werden äußerlich von den weiteren Schichten 62,63 überzogen. Die Schicht 61 mit dem Neckring 10h bildet für die folgenden Schichten einen Teil des Formhohlraums beim Spritzgießen.

### Bezugszeichenliste

- 10: Kunststoffartikel
- 10a: Gewindebereich
- 10b: Boden
- 10c: Wandung
- 10d: oberes Ende
- 10f: Zwischenbereich
- 10g: Ausnehmung
- 10h: Neckring
- 51,52,53: Anguß
- 61,62,63: Schicht

## Patentansprüche

1. Mehrschichtiger hohler Kunststoffartikel (10) zur Herstellung von Kunststoffhohlkörpern durch Verstrecken mit
- einem oberen offenen Ende (10d), das als Neckring (10h) ausgebildet ist,
- einem unteren geschlossenen Boden (10b),
- einem Boden (10b) und oberes Ende (10d) miteinander verbindenden Zwischenbereich (10f),
- einer Wandung (10c), in der mehrere Schichten (61,62,63) miteinander über ihre Kontaktfläche verbunden sind, wobei die Schicht (61), aus der der Neckring gebildet ist, gleichzeitig zumindest auch teilweise Teil der Wandung (10c) und des Bodens (10b) ist,
dadurch gekennzeichnet, daß der Neckring (10h) eine Ausnehmung (10g) aufweist, in der zumindest eine der mittleren Schichten (62) aufgenommen ist und in Richtung auf den Neckring (10f) begrenzt ist.

2. Kunststoffartikel nach Anspruch 1, dadurch gekennzeichnet, dass er nach folgendem Verfahren hergestellt ist:
a) Plastifizieren eines ersten eines zweiten Werkstoffs,
b) Einspritzen des plastifizierten ersten Werkstoffes in einen ersten Formhohlraum, der dem Anteil des ersten Werkstoffs an der Gesamtform des Kunststoffartikels (10) entspricht, zur Formung eines ersten Zwischenformlings,
c) Zusammenbringen des Zwischenformlings (21) mit einem zweiten Hohlraum zur Bildung eines zweiten Formhohlraums (15), der teilweise durch den Zwischenformling begrenzt wird und dem Anteil des zweiten Werkstoffs an der Gesamtform des Vorformlings (10) entspricht,
d) Einspritzen des plastifizierten zweiten Werkstoffs in den zweiten Formhohlraum (15),
e) Entnahme des Vorformlings (10),

3. Kunststoffartikel nach Anspruch 1 oder 2, dadurch gekennzeichnet, dass einer der eingespritzten Werkstoffe eine Barriereschicht ausbildet.

4. Kunststoffartikel nach einem der Ansprüche 1 bis 3, dadurch gekennzeichnet, daß in der Ausnehmung (10g) die äußere Schicht (63) endet, die zugleich die ringförmige Ausnehmung (10g) nach außen verschließt.

5. Kunststoffartikel nach einem der Ansprüche 1 bis 3, dadurch gekennzeichnet, daß die mittlere Schicht (62) des dreischichtigen Kunststoffartikels (10) eine Barriereschicht ist.

6. Kunststoffartikel nach einem der Ansprüche 1 bis 5, dadurch gekennzeichnet, daß der Neckring (10h) Teil einer der ersten, innen liegenden Schichten (61) ist, die in nachfolgenden Arbeitsschritten im Bereich von Boden (10b) und Zwischenbereich (10f) mit weiteren Schichten (62,63) äußerlich überzogen wird.

7. Kunststoffartikel nach einem der vorhergehenden Ansprüche, dadurch gekennzeichnet, daß die Schichten (61,62,63) des Kunststoffartikels (10) durch Spritzgießen in aufeinanderfolgenden Schritten hergestellt sind, wobei die Schicht (61) mit dem Neckring (10h) einen den Formhohlraum für das Spritzgießen folgender Schichten begrenzenden Teil bildet.
